# EUROPÄISCHE PATENTSCHRIFT

(11) **EP 3 374 446 B1**
(45) Veröffentlichungstag und Bekanntmachung des Hinweises auf die Patenterteilung: **05.01.2022**
(21) Anmeldenummer: 16793857.0
(22) Anmeldetag: 08.11.2016
(51) Int. Cl.: C09D 11/037, C09B 67/00

(54) **METALLISCHE OFFSETDRUCKFARBE MIT SPIEGELGLANZ UND DRUCKVERFAHREN**
METALLIC OFFSET PRINTING INK WITH MIRROR FINISH AND PRINTING METHOD
ENCRE D'IMPRESSION OFFSET METALLIQUE PRESENTANT UN BRILLANT SPECULAIRE ET PROCEDE D'IMPRESSION

(30) Priorität: 09.11.2015 EP 15003202
(43) Veröffentlichungstag der Anmeldung: 19.09.2018
(73) Patentinhaber: Eckart GmbH, 91235 Hartenstein (DE)
(72) Erfinder: BECKER, Michael, 91207 Lauf (DE); REITZENSTEIN, Dörte, 91207 Lauf (DE); LINDL, Alexandra, 91220 Schnaittach (DE); PLITZKO, Yvonne, 90480 Nürnberg (DE)
(74) Vertreter: Altana IP Department
(86) Internationale Anmeldenummer: PCT/EP2016/076951
(87) Internationale Veröffentlichungsnummer: WO 2017/080988

(56) Entgegenhaltungen:
- EP-A1- 1 338 630
- EP-A1- 2 083 052
- EP-A1- 2 746 349
- DE-A1-102007 036 369
- DE-A1-102008 029 821
- DE-A1-102009 037 323
- JP-A- 2003 049 091

## Beschreibung

Die vorliegende Erfindung handelt von Offsetdruckfarben enthaltend Metalleffektpigmente mit hohem Spiegelglanz, Verfahren zur Herstellung der Druckfarbe und Verfahren zum Verdrucken der Offsetdruckfarbe.

Metallpigmenthaltige Offsetdruckfarben sind seit längerem bekannt. So offenbaren beispielsweise die JP 04119594 B2 sowie die JP 2007021736 A lösemittelbasierende Offsetdruckfarben, die u.a. konventionelle Aluminiumeffektpigmente enthalten können.

Die bekannten Metallpigmenthaltigen Offsetdruckfarben weisen jedoch im Gegensatz zu beispielsweise Flexofarben, Tiefdruckfarben oder Siebdruckfarben keinen sehr hohen Spiegelglanz auf.

Offsetdruckfarben weisen, beispielsweise ganz im Gegensatz zu Digitaldruckfarben (Ink jet) oder Flexodruckfarben, einen um mehrere Größenordnungen höheren Viskositätsbereich auf. Die Viskosität von plättchenförmige Aluminiumpigmenten enthaltende Offsetdruckfarben liegt typischerweise in einem Bereich von 20 bis 80 Pa s.

Ink Jet Druckfarben weisen typischerweise eine Viskosität im Bereich von nur einigen wenigen m Pa s auf. Beim Offsetdruck ist der Weg für die aufgebrachte Druckfarbe vom Näpfchen zum Drucksubstrat ein sehr langer, so dass keine niedrigen Viskositäten eingestellt werden können. Zu niedrige Viskositäten bei Offsetdruckfarben führen zu unerwünschten Nachteilen wie "Nebeln", unzureichende Wischfestigkeit, schlechte Punktschärfe oder auch unerwünschtes Tropfen der Druckfarbe aus dem Farbkasten.

Die DE 10 2009 037323 offenbart Metallpigmenthaltige Ink Jet Druckfarben mit entsprechend niedrigen Viskositäten.

Die EP 2 083 052 A1 offenbart Pigmentpräparationen, die Metalleffektpigmente mit geringen Größen enthalten sowie deren Verwendung in Ink Jet Drucktinten.

Die EP 2 746 349 A1 offenbart Pigmentpräparationen mit sehr kleinen Metalleffektpigmenten, die bevorzugt in Flexofarben verwendet werden.

Gegenstand der DE 10 2008 029821 A1 sind Mischungen aus einem PVD-Metalleffektpigment und einem naßvermahlenem Metalleffektpigment mit sehr geringer Dicke.

JP 2003 049091 A offenbart Metalleffektpigmente, die mit einem anderen Metall beschichtet sind und deren Anwendungen wie z.B. Druckfarben.

DE 10 2007 036369 A1 offenbart einen Metalliclack mit Metalleffektpigmenten und einem organofunktionellem Silan.

Die EP 1 338 630 A1 offenbart Offsetdruckfarben mit einem speziellen Bindemittel.

Die WO 2013/119387 A1 offenbart UV-härtende Offset Druckfarben, die PVD-Metallpigmente enthalten und einen relativ hohen Glanz aufweisen. Diese Druckfarben lassen sich jedoch nicht für den konventionellen Offsetdruck verwenden. UV-härtende Farben weisen den Nachteil auf, dass bei einer nicht vollständigen Polymerisation Reste an toxikologisch bedenklichen Monomeren im Druckerzeugnis verbleiben. Dies steht dem zunehmenden Bedürfnis an migrationsarmen Druckfarben entgegen.

Aufgabe der vorliegenden Erfindung war es, eine konventionelle Offsetdruckfarbe bereitzustellen, die einen gegenüber dem Stand der Technik verbesserten metallischen Spiegelglanz aufweist. Die erfindungsgemäße Offsetdruckfarbe soll dabei in anderen anwendungstechnisch relevanten Eigenschaften keine Nachteile aufweisen. So sollten beispielsweise eine gute Verdruckbarkeit sowie die Überdruckbarkeit gegeben sein und kein "Nebeln" auftreten.

Weiterhin besteht eine Aufgabe, ein Verfahren zur Herstellung der Offsetdruckfarbe bereit zu stellen.

Weiterhin besteht eine Aufgabe, ein Verfahren zur Herstellung eines bedruckten Substrats mit Spiegelglanz bereit zu stellen.

Die gestellten Aufgaben wurden gelöst durch Bereitstellung einer Offsetdruckfarbe enthaltend plättchenförmige Aluminiumpigmente mit einer mittleren Dicke h₅₀ aus einem Bereich von 15 bis 80 nm sowie Bindemittel und Lösemittel, dadurch gekennzeichnet, dass die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist, wobei das Lösemittel der Gruppe bestehend aus Mineralölen, Pflanzenölen und Fettsäureestern oder Mischungen daraus, entnommen ist, wobei die Pflanzenöle nicht ohne mindestens eines der jeweils anderen beiden Lösemittel verwendet werden.

Die Unteransprüche 2 bis 11 enthalten bevorzugte Ausführungsformen der Offsetdruckfarbe.

Die gestellte Aufgabe wurde weiterhin gelöst durch Bereitstellung eines Verfahrens zur Herstellung einer erfindungsgemäßen Offsetdruckfarbe, wobei das Verfahren folgende Schritte umfasst:
a) Bereitstellen eines Offset-Firnisses durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

Schließlich wurde die gestellte Aufgabe gelöst durch Bereitstellung eines Verfahrens zur Herstellung eines bedruckten Substrats mit metallischem Spiegelglanz,
umfassend die folgende Schritte:
a) optional Aufbringen eines Primers auf dem Substrat
b) Aufbringen einer erfindungsgemäßen Offsetdruckfarbe auf die Primerschicht oder auf dem Substrat unter Ausbildung einer hochglänzenden Druckschicht B
c) optional Aufbringen weiterer Farbschichten auf die Schicht B.

Unteransprüche 14 bis 15 enthalten bevorzugte Ausführungsformen dieses Verfahrens.

Die Erfindung handelt von einer Offsetdruckfarbe enthaltend plättchenförmige Aluminiumpigmente mit einer mittleren Dicke h₅₀ aus einem Bereich von 15 bis 80 nm sowie Bindemittel und Lösemittel, dadurch gekennzeichnet, dass die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist, wobei das Lösemittel der Gruppe bestehend aus Mineralölen, Pflanzenölen und Fettsäureestern oder Mischungen daraus, entnommen ist, wobei die Pflanzenöle nicht ohne mindestens eines der jeweils anderen beiden Lösemittel verwendet werden.

Es wurde völlig überraschend festgestellt, dass die erfindungsgemäßen Offsetdruckfarben sehr niedrige Viskositäten aufweisen, die im Offsetdruck und speziell bei mit Metalleffektpigmenten pigmentierten Offsetdruckfarben normalerweise nicht üblich sind. Offsetdruckfarben sind bekanntermaßen recht zähflüssig, da im Offsetdruck der Weg der Druckfarbe vom Farbkasten zum Druckbild ein sehr langer ist. Nur mit diesen niedrig-viskosen Offsetdruckfarben konnte ein befriedigender Spiegelglanz erreicht werden. Die jedoch gewöhnlich im Stand der Technik aufgeführten Nachteile niedrig viskoser Offsetdruckfarben wie "Nebeln", unzureichende Wischfestigkeit, schlechte Punktschärfe oder auch unerwünschtes Tropfen der Druckfarbe aus dem Farbkasten konnten überraschenderweise nicht bestätigt werden. Die erfindungsgemäßen Offsetdruckfarben weisen eine Viskosität aus einem Bereich von 4 bis 15 Pa s, bevorzugt aus einem Bereich von 4,1 bis 12 Pa s, weiter bevorzugt aus einem Bereich von 4,2 bis 11 Pa s, besonders bevorzugt aus einem Bereich von 4,3 bis unter 10 Pa s und ganz besonders bevorzugt aus einem Bereich von 4,4 bis unter 9,5 Pa s auf. Weiter bevorzugte Viskositätsbereiche sind 4,0 bis 9,2 Pa s und 4,0 bis 9,0 Pa s.

Hierbei wird die Viskosität bevorzugt gemessen mit einem Rotationsviskosimeter (Typ: Bohlin CVO 100, Fa. Malvern Instruments) mit einer Kegel/Platte Geometrie (Neigungswinkel Kegel: 4°, Kegeldurchmesser: 40 mm) bei 25 °C Probentemperatur. Als Viskositätswert wird hierbei der Wert bei einer Schubspannung von 185,9 Pa verwendet.

Oberhalb einer Viskosität von 15 Pa s konnten keine hochglänzenden Andrucke mit dem gewünschten Spiegeleffekt erzielt werden. Unterhalb einer Viskosität von 4,0 Pa s hingegen kam es zum sogenannten "Nebeln". Hierbei lösen sich kleinste Druckfarbenpartikel beim Rotieren der Walzen der Druckmaschine ab, die sich als Farbnebel nach allen Richtungen verteilen, was zu einer Verschmutzung der Druckmaschine führt. Ferner kann es zu einer starken Verminderung der Punktschärfe und zu unzureichender Wischfestigkeit kommen.

Es war für den Fachmann nicht zu erwarten, in diesem niedrigen Viskositätsbereich mit Metalleffektpigmenten pigmentierte Offsetdruckfarben zu erhalten, die sich einwandfrei verarbeiten lassen und den hohen Spiegeleffekt aufweisen.

Im Rahmen dieser Erfindung wird unter der Viskosität der erfindungsgemäßen Offsetdruckfarbe, jene Viskosität verstanden, die die Druckfarbe vor dem Verdrucken aufweist. Dies wird bei kommerziell gelieferten Produkten häufig eine Druckfarbe sein, die bereits eine gewisse Zeit, beispielsweise zwei bis vier Wochen, nach ihrer Herstellung gealtert ist, da die Druckfarbe erst transportiert werden und gegebenenfalls eine Lagerzeit vor ihrer Verwendung verbringen muss.

Die erfindungsgemäßen Offsetdruckfarben weisen überraschenderweise eine Abnahme ihrer Viskosität nach der Herstellung mit der Zeit auf. Typischerweise wird nach ca. ein bis zwei Wochen eine konstante Viskosität erreicht. Dies ist für mit Metallpigmenten pigmentierte Effektoffsetdruckfarben eher ungewöhnlich, da normalerweise ein gewisser Anstieg der Viskosität mit der Zeit beobachtet wird.

Für die plättchenförmigen Aluminiumpigmente ist es erfindungswesentlich, dass die Pigmente durch PVD-Verfahren hergestellt werden. Bei diesem Verfahren wird im Ultrahochvakuum Aluminiumdampf auf ein zuvor mit einem Release-coat versehenes Polymerband, typischerweise ein PET-Band, aufgedampft. Anschließend wird die Metallfolie in einer "Stripping"-Kammer unter Normaldruck in eine Lösemittelbahn überführt. Dabei löst sie sich vom polymeren Untergrund ab und wird zerkleinert. Durch eine anschließende mechanische Behandlung wird die Zerkleinerung forciert und kontrolliert auf gewünschte Pigmentgrößen eingestellt.

Derart hergestellte Aluminiumpigmente sind die optisch hochwertigsten aufgrund ihrer äußerst glatten Oberfläche sowie der beim Zerkleinerungsprozess erzeugten geraden Schnittkanten, die wenig Anlass für unerwünschte Streueffekte für einfallendes Licht geben. Es hat sich gezeigt, dass nur die Anwesenheit dieser Pigmente den gewünschten Spiegeleffekt in den erfindungsgemäßen Offsetdruckfarben zu geben vermögen.

Zwar ist es inzwischen gelungen, auch durch Nassvermahlung Aluminiumeffektpigmente herzustellen, die die mittleren Dicken und teilweise sogar die Dickenverteilungen der PVD-Pigmente aufweisen (EP 2102294 B1, EP 1613702 B1, EP 1621586 B1). Diese Metalleffektpigmente alleine erwiesen sich jedoch nicht als geeignet genug für die erfindungsgemäße Offsetdruckfarbe.

Die mittlere Dicke h₅₀ der PVD-Aluminiumeffektpigmente liegt in einem Bereich von 15 bis 80 nm, bevorzugt in einem Bereich von 20 bis 50 nm und ganz besonders bevorzugt in einem Bereich von 25 bis 40 nm.

Unterhalb von 15 nm werden die Pigmente zunehmend transparent und dunkel, was dem gewünschten Spiegeleffekt abträglich ist. Oberhalb von 80 nm ist die Orientierung der Pigmente nicht optimal, was ebenfalls zu verringerten Glanzwerten führt.

Die mittlere Pigmentdicke wird gemessen mittels Auszählen im REM. Details zu der Messmethode können der EP 1613702 B1 (Absätze [0125] und [0126]) entnommen werden. Der h₅₀-Wert ist hierbei der Wert der Dickensummenverteilung, bei dem 50 % aller Teilchen unterhalb dieser Dicken liegen.

Im Einzelnen erfolgt die Bestimmung der mittleren Dicke h₅₀ im REM derart, dass man die Aluminiumpigmente die jeweils als Paste oder Filterkuchen vorliegen, jeweils zunächst mit Aceton wäscht und dann ausgetrocknet.

Ein in der Elektronenmikroskopie übliches Harz, beispielsweise TEMPFIX (Gerhard Neubauer Chemikalien, D-48031 Münster, Deutschland), wird auf einen Probenteller aufgebracht und auf einer Heizplatte bis zum Erweichen erhitzt. Nachfolgend wird der Probenteller von der Heizplatte genommen und das jeweilige Aluminiumpulver auf das erweichte Harz gestreut. Das Harz wird durch die Abkühlung wieder fest und die aufgestreuten Aluminiumpigmente könnenbedingt durch das Wechselspiel zwischen Adhäsion und Schwerkraft- nahezu senkrecht stehend und fixiert auf dem Probenteller präpariert werden. Dadurch sind die Pigmente im Elektronenmikroskop seitlich gut zu vermessen. Bei der Vermessung der Dicke wird der azimuthale Winkel α des Pigmentes zu einer zur Oberfläche normalen Ebene geschätzt und bei der Dickenauswertung nach der Formel h_{eff}=hₘₑₛₛ/cos α berücksichtigt. Von den h_{eff}-Werten wurde anhand der relativen Häufigkeiten die Summenverteilungskurve erstellt. Es werden mindestens ca. 100 Teilchen gezählt.

Die mittleren Größen d₅₀ der PVD-Aluminiumeffektpigmente liegen in einem Bereich von 4 bis 15 µm, bevorzugt in einem Bereich von 5 - 13 µm und besonders bevorzugt in einem Bereich von 5,5 - 11 µm und ganz besonders bevorzugt in einem Bereich von 7,5 bis 11 µm. Aluminiumeffektpigmente mit einem d₅₀-Wert oberhalb von 15 µm weisen beim Offsetdruckprozess keinen ausreichenden Transfer auf, während Aluminiumeffektpigmente mit einem d₅₀-Wert unterhalb von 4 µm einen zu dunklen optischen Effekt, der kein Spiegelglanz mehr ist, erzeugen. Die d₅₀-Werte werden ermittelt mittels der üblichen Lasergranulometrie, wobei als Meßgerät bevorzugt ein Cilas 1064 (Fa. Quantachrome) eingesetzt wird.

Die PVD Pigmente sind kommerziell erhältlich in Form von Dispersionen mit einem Pigmentgehalt von 10 bis 20 Gew.-%. Sie sind beispielsweise unter folgenden Handelsnamen erhältlich: Metalure^{®} (Fa. Eckart America), Starbrite^{®} (Fa. Silberline) und Decomet^{®} (Fa. Schlenk).

Die PVD-Aluminiumpigmente können mit weiteren Beschichtungen wie beispielsweise Metalloxide versehen sein. Bevorzugt ist eine Beschichtung mit SiO₂, die neben verbessertem Korrosionsschutz auch als Ankerschicht für die Modifizierung der Pigmentoberfläche mit leafing Additiven, bevorzugt mit langkettigen Organosilanen fungieren kann.

Die Pigmentierungshöhe der Aluminiumpigmente in der Druckfarbe beträgt 2 bis 8 Gew.-%, bevorzugt 3 bis 7 Gew.-% und besonders bevorzugt 4 bis 6,5 Gew.-%, jeweils bezogen auf das Gesamtgewicht der Offsetdruckfarbe.

Unterhalb von 2 Gew.-% ist die Deckung der Aluminiumpigmente nicht ausreichend, was den Metalleffekt stark vermindert. Oberhalb von 8 Gew.-% wird die Orientierung der Effektpigmente in der gedruckten Offsetdruckfarbe gestört durch eine zunehmende räumliche Einengung und gegenseitige räumliche Behinderung der Pigmente untereinander. Ein stark verminderter Glanz ist hier die Folge.

Bevorzugt enthält die erfindungsgemäße Offsetdruckfarbe keine weiteren Effektpigmente wie Perlglanzpigmente und/oder Interferenzpigmente. Der Zusatz weiterer Effektpigmente wie beispielsweise Perlglanzpigmente würde den erwünschten Spiegelglanz erheblich vermindern. Es ist bevorzugt, dass die erfindungsgemäße Offsetdruckfarbe keine Perlglanzpigmente enthält.

Der Zusatz von Buntpigmenten würde zwar, in Abhängigkeit von ihrer Transparenz, zu einem verminderten Spiegelglanz führen. Zudem würde sich kein kräftiger Färbeeffekt einstellen, da die Aluminiumeffektpigmente aufgrund ihres leafings die Buntpigmente weitgehend im Druck überdecken würden. Es kann jedoch erstrebenswert sein, durch Zusatz geeigneter, vorzugsweise transparenter Buntpigmente, einen eingefärbten Druck mit erheblichem Metalleffekt zu erhalten. So kann beispielsweise durch Zugabe geeigneter gelber und/oder roter transparenter Buntpigmente ein goldener, stark metallischer Druck erzeugt werden.

Als weiterer Pigmentzusatz ist bevorzugt die Beimischung von konventionellen Aluminiumpigmenten, die durch Nassvermahlung hergestellt werden, geeignet. Hierbei sollten die Pigmente bevorzugt eine mittlere Dicke in einem Bereich von 15 - 80 nm und besonders bevorzugt von 20 bis 50 nm aufweisen. Die Herstellung derartiger Pigmente wurden in EP 2102294 B1, EP 1613702 B1 oder EP 1621586 B1 beschrieben, die hiermit unter Bezugnahme aufgenommen sind.

Die Menge dieses Pigmentzusatzes sollte 40 Gew.-%, bevorzugt 20 Gew.-% und weiter bevorzugt 10 Gew.-%, bezogen auf die Gesamtmenge der Aluminiumpigmente, nicht überschreiten.

In weiter bevorzugten Ausführungsformen enthält die erfindungsgemäße Offsetdruckfarbe keinen Zusatz von konventionell vermahlenen Aluminiumpigmenten.

Gegenstand der Erfindung sind ölbasierende Offsetdruckfarben. Die erfindungsgemäßen Offsetdruckfarben sind nicht UV-härtbar. Sie enthalten weitgehend keine Monomere, bevorzugt keine Monomere, die geruchsbelastend und gesundheitsschädlich sein können.

Die Lösemittel für die erfindungsgemäßen Offsetdruckfarben sind der Gruppe bestehend aus Mineralölen, Pflanzenölen und Fettsäureestern oder Mischungen daraus, entnommen. Hierbei werden Pflanzenöle jedoch nicht ohne mindestens eines der jeweils anderen beiden Lösemittel verwendet.

Als Pflanzenöle geeignet sind Öle und davon abgeleitete Polyester auf der Basis von Leinöl, Sojaöl, Sonnenblumenöl, Maiskeimöl, Traubenöl, Safloröl, Tallöl, Baumwollsaatöl, Ricinusöl, Holzöl, Oiticicaöl oder Perillaöl oder Mischungen hiervon.

Es können auch synthetische Pflanzenöle verwendet werden, wie sie beispielsweise in der EP 0 886 671 B1 offenbart sind.

Fettsäureester sind Verbindungen aus Mono-, Di- oder Triglyceride und langkettigen Fettsäuren. Bevorzugt sind Fettsäureester, bei der die verwendeten Fettsäuren eine Kohlenstofflänge von 6 - 26 C-Atomen aufweisen. Bei den Fettsäuren kann es sich um gesättigte oder ungesättigte Fettsäuren handeln. Beispiele für Fettsäuren sind: Octandecensäure, Linolsäure, Linolensäure, Eleastearinsäure, Tetradecensäure, Hexadecensäure, Octandecansäure, Aracinsäure, Dodecansäure, Hexansäure, Octansäure, Decansäure und Dodecensäuren.

Beispielsweise können als Fettsäureester Isopropyllaurat (IPL) oder Pentaerythrittetraoctoat (PTO) verwendet werden.

In bevorzugten Ausführungsformen sind die erfindungsgemäß Offsetdruckfarben für den Lebensmittelkontakt geeignet. Bei diesen Ausführungsformen enthalten die Lösemittel jedoch keine Mineralöle; das Lösemittel ist vielmehr ein Gemisch aus Pflanzenölen und Fettsäureestern.

Der Lösemittelgehalt der die erfindungsgemäßen Offsetdruckfarben liegt in einem Bereich von 40 bis 72 Gew.-% und bevorzugt in einem Bereich von 43 bis 68 Gew.-% und ganz besonders bevorzugt in einem Bereich von 45 bis 60 Gew.-% jeweils bezogen auf die gesamte Offsetdruckfarbe.

Als leafing Additiv kommt erfindungsgemäß prinzipiell jede Verbindung in Frage, die imstande ist, einen leafing-Effekt der Aluminiumpigmente in einem Offsetdruck zu erzeugen. Unter leafing versteht man üblicherweise das Aufschwimmen der plättchenförmigen Aluminiumpigmente im Anwendungsmedium. Durch das Anreichern an der Oberfläche findet eine sehr gute planparallele Orientierung der Aluminiumpigmente im Druck statt, was einen hohen Glanz ermöglicht.

Bevorzugt ist das leafing Additiv eine organische Phosphor-haltige Verbindung, die
a) Phosphorsäuren oder Phosphorsäureester mit der allgemeinen Formel (I)

   (O)P(OR¹)(OR²)(OR³) (I)

   und/oder
b) Phosphonsäuren oder Phosphonsäureester der allgemeinen Formel (II)

   (O)PR⁴(OR¹)(OR²) (II)

   und/oder
c) Phosphinsäure oder Phosphinsäureester der allgemeinen Formel (III)

   (O)PR⁴R⁵(OR¹) (III)

   sein. Hierbei sind R¹, R² und R³ unabhängig voneinander H oder eine verzweigte oder unverzweigte Alkyl-, Aryl-, Alkylaryl-, Arylalkylgruppe mit 1 bis 30 C-Atomen, die optional Heteroatome wie O, S, und/oder N enthält, mit der Maßgabe, dass im Fall einer Verbindung der Formel (I) mindestens einer dieser Reste eine verzweigte oder unverzweigte Alkyl-, Aryl-, Alkylaryl-, Arylalkylgruppe mit 8 bis 30 C-Atomen ist. Besonders bevorzugt sind verzweigte oder unverzweigte Alkylreste ohne Heteroatome.

R⁴ und R⁵ sind unabhängig voneinander eine verzweigte oder unverzweigte Alkyl-, Aryl-, Alkylaryl-, Arylalkylgruppe mit 8 bis 30 C-Atomen ist, die optional Heteroatome wie O, S, und/oder N enthält. Besonders bevorzugt sind verzweigte oder unverzweigte Alkylreste ohne Heteroatome.

Weiterhin können die leafing Additive eine Verbindung der allgemeinen Formel (IV)

R⁶-X (IV)

sein, wobei R⁶ ein aliphatischer, bevorzugt unverzweigter, Alkylrest mit 12 bis 30 C-Atomen ist und wobei X eine Carboxylgruppe oder eine Carboxylatgruppe, eine Aminogruppe oder ein Trialkoxysilan ist.

Besonders bevorzugt sind bei Verbindungen der Formeln (II), (III) oder (IV) die leafing Additive R⁴, R⁵ und R⁶ unabhängig voneinander eine verzweigte oder unverzweigte Alkyl-, Aryl-, Alkylaryl-, Arylalkylgruppe mit 14 bis 20 C-Atomen ist. Besonders bevorzugt sind hierbei die Reste R⁴, R⁵ und R⁶ unabhängig voneinander eine verzweigte oder unverzweigte Alkylgruppe mit 14 bis 20 C-Atomen.

In weiteren bevorzugten Ausführungsformen ist das leafing Additiv:
i) eine Phosphonsäure, wobei R¹= R²= H und R⁴ eine verzweigte oder unverzweigte Alkyl-, Aryl-, Alkylaryl-, Arylalkylgruppe mit 8 bis 18 C-Atomen ist
   oder
ii) ein Phosphorsäureester ist, wobei mindestens einer der Reste R¹, R², R³ eine verzweigte oder unverzweigte Alkylgruppe mit 8 bis 18 C-Atomen ist
   oder
iii) eine Carbonsäuren gemäß Formel (IV) ist, die der Gruppe bestehend aus Stearinsäure, Ammoniumstearat, Alkalistearat, Erdalkalistearat oder Mischungen hiervon.

Als phosphorhaltige leafing Additive können z.B. verwendet werden:
Octadecylphosphorsäureester (Hordaphos MDST, Fa. Clariant), Phosphorsäuremonocetylester (Hostaphat CC 100), Stearylphosphonsäure, Laurylphosphonsäure, Oktanphosphonsäure oder Mischungen hieraus.

Als Carbonsäuren wird bevorzugt Stearinsäure verwendet. Als Silane werden bevorzugt, Dynasylan 9116, Dynasylan OCTEO oder Dynasylan OCTMO verwendet (Fa. Evonik). ,

Im Rahmen dieser Erfindung werden unter dem Begriff "Bindemittel" jene Harze, die die Trocknung und Verfestigung der Metalleffektpigmentdruckfarbe bewirken, verstanden. Es werden hier nicht die ölartigen Lösemittel hinzugezählt.

Bei dem Bindemittel der erfindungsgemäßen Offsetdruckfarbe handelt es sich bevorzugt um Alkydharze, modifizierte Kolophoniumharze, Maleinatharze, aromatische Kohlenwasserstoffharze, modifizierte Kohlenwasserstoffharze, Allylester mehrwertiger organischer Säuren, Polyallylether und deren Mischungen. Bei modifizierten Kohlenwasserstoffharzen sind aromatisch modifizierte Kohlenwasserstoffharze besonders bevorzugt.

Allylester mehrwertiger organischer Säuren und Polyallylether sind in EP 0 886 671 B1 beschrieben, die hiermit unter Bezugnahme aufgenommen ist. Diese Bindemittel sind besonders gut geeignet für die Formulierung migrationsarmer Offsetdruckfarben.

Besonders bevorzugte Bindemittel sind solche, die auf nachwachsenden Rohstoffen basieren, wie Alkydharze, modifizierte Kolophoniumharze, aromatische Kohlenwasserstoffharze, modifizierte Kohlenwasserstoffharze und Mischungen hieraus.

Als modifizierte Kolophoniumharze eignen sich beispielsweise solche, die mit Acrylsäure oder Maleinsäure modifiziert sind.

Der Gehalt der Bindemittel in den erfindungsgemäßen Offsetdruckfarben liegt bevorzugt in einem Bereich von 22 bis 55 Gew.-%, besonders bevorzugt in einem Bereich von 24 bis 50 Gew.-%, und ganz besonders bevorzugt in einem Bereich von 28 bis 43 Gew.-%, jeweils bezogen auf die gesamte Offsetdruckfarbe.

Oberhalb eines Gehalts von 55 Gew.-% ist es kaum noch möglich, den gewünschten Spiegeleffekt zu erzielen. Unterhalb von 22 Gew.-% Bindemittelgehalt weisen die Offsetdrucke eine zu geringe Filmfestigkeit auf.

Weiterhin enthält die erfindungsgemäße Offsetdruckfarbe weitere Additive wie beispielsweise Trockenmittel, Wachse, Filmbildehilfsmittel, Antioxidantien, Dispergierhilfsmittel und deren Mischungen.

Trockenmittel sind meist Katalysatoren für die Vernetzung der ungesättigten Bindungen der Bindemittel. Hierbei handelt es sich beispielsweise um Mangansalze, Kobaltsalze oder Eisensalze von Fettsäuren und Mischungen hiervon.

Wachse bewirken u.a. eine verbesserte Scheuer- und Kratzfestigkeit der bedruckten Oberflächen.

Beispiele hierfür sind Polyethylenwachse, Candelillawachs, Carnaubawachs, mikrokristallines Wachs, PTFE-Wachse oder Mischungen hiervon.

Die erfindungsgemäße Offsetdruckfarbe kann auch ein oder mehrere Antioxidantien umfassen. Durch den Zusatz von Antioxidantien kann insbesondere eine unerwünschte Oxidation von ungesättigten Harzsäuren, Harzsäureestern und/oder Fettsäureestern, die in dem oder den Bindemitteln enthalten sind, verhindert oder zumindest reduziert werden.

Die Antioxidantien werden bevorzugt ausgewählt aus Ascorbinsäure, Ascorbylpalmitat, Ascorbylstereat, Isoascorbinsäure, Tocopherolen, Propyl-, Octyl- und Dodecylgallat, tert-Butylhydrochinon, Butylhydroxyanisol, Butylhydroxytoluol und Mischungen hiervon.

Dispergierhilfsmittel sind Tenside, deren pigmentaffinen Köpfe am Pigment adsorbiert sind, während die langen Ketten in das Dispergiermedium hineinragen. Treffen zwei Pigmentpartikel aufeinander, können ihre Oberflächen nicht aneinander haften bleiben, weil sie von den Tensiden auf Abstand gehalten werden. Diese sterische Stabilisierung verhindert die Bildung von Agglomeraten und sorgt für eine homogene Verteilung der Einzelpigmente in der Druckfarbe.

Die in die Flüssigphase ragenden Ketten setzen außerdem die Oberflächen- und Grenzflächenspannung herab und ermöglichen dadurch eine gute Benetzung der Pigmentoberfläche mit der Flüssigphase.

Die Güte der homogenen Verteilung von Metallpigmenten in einer Druckfarbe ist entscheidend für die Qualität und Stabilität dieser.

Derartige Dispergierhilfsmittel werden in aller Regel der Druckfarbe während der Rezeptierung zugesetzt im Gegensatz zu den leafing Additiven, die bevorzugt der Metallpigmentpaste zugesetzt werden, da sie auf diese Weise besonders gut auf die Metallpigmentoberfläche aufziehen können.

Beispiele für Dispergierhilfsmittel sind Disperbyk 108, Disperbyk 111 oder Disperbyk 2200 der Fa. Byk Additives & Instruments.

In bevorzugten Ausführungsformen werden der Offsetdruckfarbe keine Rheologieadditive oder nur sehr wenig (< 1 Gew.-%, bevorzugt < 0,3 Gew.-%, bezogen auf die gesamte Offsetdruckfarbe) zugesetzt, da die erfindungsgemäß sehr niedrige Viskosität bevorzugt nur über die Lösemittelmenge eingestellt wird.

Diese weiteren Additive liegen bevorzugt in einem Mengenbereich von 1-10 Gew.-%, bezogen auf das Gesamtgewicht der Offsetdruckfarbe, vor. Weiter bevorzugt ist ein Mengenbereich von 2 - 8 Gew.-%, und besonders bevorzugt ein Mengenbereich von 3 bis 5 Gew.-%.

Gegenstand der Erfindung ist weiterhin ein Verfahren zur Herstellung der erfindungsgemäßen Offsetdruckfarbe. Dieses Verfahren umfasst folgende Schritte:
a) Bereitstellen eines Offset-Firnisses durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

Das Herstellen eines Offset-Firnisses durch Vermischen und Erhitzen von Bindemitteln und Lösemitteln (Schritt a)) ist aus dem Stand der Technik gut bekannt.

PVD-Aluminiumeffektpigmente sind in Form niedrig pigmentierter Dispersionen oder Pasten (ca 5 bis maximal 20 Gew.-% Pigmentierungshöhe) kommerziell erhältlich. Dabei steht eine große Bandbreite an unterschiedlichen Lösemitteln zur Verfügung, wie beispielsweise aus der Metalure^{®}-Reihe der Fa. Eckart America ersichtlich.

Bei der Bereitstellung einer Paste mit PVD-Aluminiumeffektpigmenten wird bevorzugt eine Paste oder Dispersion eingesetzt, die ein mit der Offsetdruckfarbe kompatibles Lösemittel und/oder ein leicht flüchtiges Lösemittel enthält. Beispiele solcher Lösemittel sind Ethanol, Ethylacetat, Isopropanol oder Aceton.

Für die Aufbringung des Additivs wird dieses bevorzugt zunächst in einem mit der Offsetdruckfarbe kompatiblen Lösemittel gelöst. Erfindungsgemäß ist dieses Lösemittel eines aus der Gruppe der Mineralöle, Pflanzenöle, Fettsäureester oder deren Mischungen. Zur besseren Löslichkeit können noch geringe Mengen (bis ca. 10 Gew.-%, bevorzugt bis 5 Gew.-%) eines besonders guten, leicht flüchtigen Lösemittels hinzugesetzt werden. Anschließend vermischt man diese Lösung mit der Aluminiumpigmentdispersion und homogenisiert diese Mischung. Dies kann bei Raumtemperatur, jedoch auch bei erhöhten Temperaturen geschehen. Dabei zieht das leafing-Additiv auf die Pigmentoberfläche auf. Optional kann man anschließend die leicht-flüchtigen Lösemittel aus der Pigmentpaste unter Vakuum weitgehend entfernen. Hierbei können bis zu ca. 2 Gew.-%, bevorzugt unter 1 Gew.-% des leicht flüchtigen Lösemittels noch in der Dispersion verbleiben.

Bei einem anderen Verfahren kann das leafing-Additiv gleich bei der Herstellung des PVD-pigments eingesetzt werden. PVD-Pigmente werden hergestellt, indem zunächst ein Trägerband aus Polymerfolie (üblicherweise PET) mit einem sogenannten release-coat beschichtet wird. Diese Beschichtung kann außerhalb der Ultrahochvakuumkammer oder innerhalb dieser durchgeführt werden (US 6,398,999 B1). Hierauf wird in einer Ultrahochvakuumkammer eine dünne Aluminiumfolie auf die release-coat beschichtete Trägerfolie aufgedampft. Die derart beschichtete Folie wird anschließend in eine "stripping Kammer", die nicht mehr unter Ultrahochvakuum steht, überführt. In dieser wird die Folie in einem geeigneten Lösemittel (z.B. Aceton) gelöst, wobei sich die aufgedampfte Metallfolie teilweise ablöst und zerkleinert. Weiterhin schließen sich Aufkonzentrationsschritte und Trennungsschritte von Pigment und Resten des gelösten release-layers an, wobei üblicherweise eine vollständige Trennung nicht gelingt. Anschließend wird der hierbei entstandene Filterkuchen im gewünschten Lösemittel dispergiert. Durch gezielte Zerkleinerungsschritte (z.B. mit einem Dissolver) kann die Teilchengröße der plättchenförmigen PVD-Aluminiumpigmente weiter auf die gewünschten Zielwerte eingestellt werden.

Es ist nun in einer Ausführungsform möglich, das leafing Additiv bereits in dem Lösemittel der stripping-Kammer zu lösen, so dass es gleich auf die entstehenden Aluminiumpigmente aufzieht, wie erstmals in EP 826745 A2 beschrieben. Hierbei sollte als Lösemittel bevorzugt ein ebenfalls mit einer Offsetdruckfarbe kompatibles Lösemittel verwendet werden. In einer weiteren Ausführungsform kann das leafing-Additiv auch in dem Lösemittel gelöst werden, welches bei der Konfektionierung des Pigmentfilterkuchens eingesetzt werden soll.

Bei Schritt c) wird bevorzugt der Firnis zunächst durch Zugabe weiterer Lösemittel verdünnt. Soll die Offsetfarbe weitere Additive wie beispielsweise Trockenmittel, Wachse, Filmbildehilfsmittel, Antioxidantien, Dispergierhilfsmittel und deren Mischungen enthalten, so setzt man diese bevorzugt dem verdünnten Firnis hinzu. Eine Zugabe zur PVD-Aluminiumeffektpigmentdispersion könnte deren leafing-Eigenschaften des Effektpigments beeinträchtigen. Anschließend vermischt man den Firnis mit der Effektpigmentdispersion in üblicher Weise. Hierbei wird bevorzugt gerührt.

Die Einstellung der Zielviskosität erfolgt bevorzugt lediglich durch Zugabe einer ausreichenden Menge weiteren Lösemittels.

Weiterhin kann im Zuge der Erfindung ein bedrucktes Substrat mit metallischem Spiegelglanz hergestellt werden, umfassend
a) optional eine Primerschicht A
b) eine durch Offsetdruck aufgebrachte Schicht B unter Verwendung einer erfindungsgemäßen Offsetdruckfarbe, die gegebenenfalls auf der Primerschicht A aufgebracht ist,
c) optional weitere Farbschichten C.

Besonders bevorzugt sind hierbei bedruckte Substrate mit einem Primer, da in diesem Fall sich besonders gute Spiegeleffekte erzielen lassen.

Als Primer können im Prinzip sowohl wasserbasierende Systeme als auch konventionelle Systeme verwendet werden. Bevorzugt sind hierbei die konventionellen, lösemittelbasierenden Primersysteme, da sie in der Regel besser verträglich mit der erfindungsgemäßen Offsetdruckfarbe sind.

Der Primer kann auch mit beispielsweise Buntpigmenten pigmentiert sein. In einer ganz besonders bevorzugten Ausführungsform jedoch ist der Primer eine Lasurschicht.

Der Primer kann auf das Substrat lackiert werden oder mittels Druckverfahren aufgebracht werden. So kann der Primer beispielsweise ein Schutzlack sein.

Als Substrate können erfindungsgemäß alle im Offsetdruck üblichen Substrate verwendet werden. So können beispielsweise Papier, Karton (in gebleichter Form und/oder in gestrichener Form), Kunststofffolien, Glas, Keramik, oder Metall bedruckt werden.

Bevorzugte Substrate sind jene auf Basis von Papier oder Karton. Hierbei kann es sich um recycling-Produkte oder Frischfaser oder deren Mischungen handeln.

Gegenstand der Erfindung ist weiterhin ein Verfahren zur Herstellung eines hochglänzenden metallischen Druckbildes auf einem Substrat. Dieses Verfahren umfasst die folgenden Schritte:
a) optional Aufbringen eines Primers auf dem Substrat
b) Aufbringen einer erfindungsgemäßen Offsetdruckfarbe auf die Primerschicht oder auf dem Substrat unter Ausbildung einer hochglänzenden Druckschicht B
c) optional Aufbringen weiterer Farbschichten C auf die Schicht B.

In den meisten Fällen lassen sich bereits sehr gute Spiegelglanzeffekte erzeugen, indem lediglich in einem Schritt die erfindungsgemäße Offsetdruckfarbe auf das Substrat aufgebracht wird.

In bevorzugten Ausführungsformen wird jedoch als erster Schritt a), vor dem Aufbringen der hochglänzenden Druckschicht B, ein Primer auf das Substrat aufgebracht. Mit dieser Vorgehensweise lassen sich besonders gute Spiegeleffekte erzielen. Der Primer gleicht bei rauen Substraten Unregelmäßigkeiten der Oberflächenstruktur aus und schafft somit eine glattere Untergrundstruktur, was der Ausbildung eines Spiegeleffekts mit der erfindungsgemäßen Offsetdruckfarbe entgegen kommt.

Die Aufbringung eines Primer empfiehlt sich ebenfalls bei Verwendung stark saugender Substrate wie beispielsweise Naturpapier oder ungestrichenem Papier oder Karton. In diesem Fall kann das Lösemittel der Druckfarbe teilweise durch das Substrat aufgesaugt werden, was naturgemäß die Viskosität im Druckfilm schlagartig erhöht. Dem zufolge sind die plättchenförmigen Aluminiumpigmente weniger gut in der Lage, eine planparallele Orientierung zum Substrat einzunehmen.

Die erfindungsgemäße Offsetfarbe kann bei Schritt B in einem oder in mehreren Schritten, beispielsweise zwei Schritten, auf das Substrat oder auf den Primer aufgebracht werden. In den meisten Fällen ist es jedoch möglich, dass die erfindungsgemäße Offsetdruckfarbe in einem Schritt aufgebracht wird. Schicht B nur einmal in einem Druckvorgang aufgebracht wird.

Durch das Aufbringen eines zusätzlichen Überdrucklackes, z.B. wässrig oder UV härtend, wird ein Schutz des Druckerzeugnisses, z.B. gegen mechanische Beanspruchung hervorgerufen. Damit kann beispielsweise eine hervorragende Abrieb- und Kratzfestigkeit gegeben werden.

Um diverse visuelle Effekte erzielen zu können, werden bei Druckprozessen Techniken, wie Überlappen und Überdrucken mit zusätzlichen Buntfarben herangezogen.

Das Druckverfahren kann als Bogenoffset- oder als Rollenoffsetverfahren durchgeführt werden.

Es stellte sich überraschenderweise heraus, dass auf die Schicht B auch weitere Farbschichten C aufgebracht werden können, ohne dass diese die Haftung verlieren.

Hierbei kann das Aufdrucken mittels eines Offsetfarbwerks oder eines anschließenden Flexofarbwerks inline in einem Druckdurchgang erfolgen. Diese Methode ist besonders kostengünstig. Es kann alternativ die Farbschicht C auch durch ein beliebiges anderes Druckverfahren im offline-Modus in einem zweiten Druckdurchgang nach Trocknung des ersten Drucks aufgebracht werden.

Die weiteren Farbschichten C, bevorzugt eine (Zahl 1) Farbschicht C, können transparent sein. Dies ist der Fall, wenn das Druckbild lediglich einen silbernen Spiegelglanzeffekt erfordert, jedoch die Aluminiumpigmente sich teilweise abwischen lassen. Durch die überdruckte Schicht C erhält der Druck Abriebstabilität.

Verwendet man bei den Druckschichten C jedoch mit Buntpigmenten pigmentierte Druckfarben, so lassen sich äußerst reizvolle Druckeffekte realisieren.

### Experimenteller Teil:

### I Herstellung Offsetdruckfarben:

Beispiel 1:
1a. Herstellung Firnis 1:
   Entsprechend der in Tabelle 1 angegebenen Rezeptur wurden die Lösemittel der Position 4 und Position 5 vorgelegt und auf 135°C aufgeheizt. Bei dieser Temperatur wurden die Harze der Positionen 6, 7 und 8 der Mischung beigegeben und weiter erhitzt bis 170°C. Bei dieser Temperatur wurde nach einer Lösungsdauer von 15 Minuten die Positionen 9, 10, 11 und 12 hinzugefügt. Nach vollständiger Homogenisierung wurde der Firnis abgekühlt auf Raumtemperatur.
1b. Herstellung der Pigmentpaste:
   Position 2 wurde in Position 3 und zusätzlich 3% Ethylacetat gelöst. Anschließend wurde Position 1 (kommerziell erhältliche Pigmentdispersion Metalure^{®} A-41510 (15 Gew.-%-ige Dispersion eines PVD-Aluminiumpigments in Ethanol, d₅₀ = 10 µm, h₅₀ = 25 nm; Fa. Eckart America; die in Tabelle 1 angegebene Metalure^{®} Menge bezieht sich auf den reinen Aluminiumgehalt der Dispersion) hinzugegeben und unter Rühren homogenisiert. Als letzter Schritt wurden unter Vakuum die Lösemittel Ethylacetat und Ethanol abgedampft.
1c. Offsetdruckfarbe: Zu dem im ersten Schritt hergestellte Firnis 1 wurden Position 13 und 14 zugegeben und dispergiert. Nach Zugabe der in Schritt 2 hergestellten Pigmentpaste wurde unter Rühren nochmals homogenisiert.
1d. Einstellung Druckviskosität:
   Die Druckviskosität wurde abschließend mit dem Pflanzenöl Estisol 312 eingestellt. Die Viskosität wurde anhand eines Rotationsviskosimeters (Typ: Bohlin CVO 100, Fa. Malvern Instruments) mit einer Kegel/Platte Geometrie (Neigungswinkel Kegel: 4°,
   Kegeldurchmesser: 40 mm) vermessen. Hierbei wurde die Messprobe auf 25 °C temperiert und das Messprogramm so eingestellt, dass die Schubspannung in einem Bereich von 11,6 bis 744,1 Pa variiert wurde. Als Viskositätswert wurde hierbei der Wert bei einer Schubspannung von 185,9 Pa verwendet.

**Tabelle 1: Rezepturbestandteile Beispiel 1:**

| **Bestandteil Rezeptur** | **Position** | **Einwaage [Gew.-%]** | **Rohstoff Handelsname** | **Hersteller** | **Rezepturbestandteil** | **Rohstoffbeschreibung** |
|---|---|---|---|---|---|---|
| Metallpig mentpaste | 1 | 5,4405 | Metalure^{®} A-41510 | Eckart America | PVD-Aluminiumpigment Dispersion | Aluminium |
| | 2 | 1,0881 | Stearinsäure | HEMA GmbH & Co. KG | leafing Additiv | Stearinsäure |
| | 3 | 5,1714 | PKWF 28/31 AF neu | Haltermann | Lösemittel | Mineralöl Aromatenfrei Siedebereich 280-310°C |
| Firnis 1 | 4 | 9,23 | PKWF 28/31 | Haltermann | Lösemittel | Mineralöl Siedebereich 280-310°C |
| | 5 | 5,68 | HOLZÖL | HEMA GmbH & Co. KG | Lösemittel | Holzöl |
| | 6 | 9,94 | Setaprint^{™} 1856 E | Lawter | Harz | phenolmodifiziertes Kolophoniumharz |
| | 7 | 7,1 | Worlee Petroleumharz SK-150 | Worlee | Harz | aromatisches Kohlenwasserstoffharz; Petroleumharz; modifiziertes KW Harz |
| | 8 | 15,62 | Novarez TA 120 | Rütgers | Harz | Phenol-modifiziertes KW Harz |
| | 9 | 8,52 | SYNTHALA T D 272 | Synthopol | Harz | Alkydharz |
| | 10 | 11,005 | PKWF 28/31 | Haltermann | Lösemittel | Mineralöl Siedebereich 280-310°C |
| | 11 | 2,13 | OPTIFILM ENHANCER 300 | Eastman | Filmbildehilfsmittel | |
| | 12 | 0,71 | PKWF 28/31 | Haltermann | Lösemittel | Mineralöl Siedebereich 280-310°C |
| Offsetdruckfarbe | 13 | 0,65 | Borchers Dry 0411 HS | OMG Group | Trockenmittel | Mangancarboxylat gelöst in Fettsäureester |
| | 14 | 17,715 | Estisol 312 | Easti Chem A/S | Lösemittel | Fettsäureester |

| | | | | | | |
|---|---|---|---|---|---|---|
| Summe: **100** | | | | | | |

### Beispiel 2:

2a. Herstellung Firnis 2:
   Entsprechend der in Tabelle 2 angegebenen Rezeptur wurden die Positionen 4 bis 8 gemischt und auf 170°C erhitzt. Nach einer Kochdauer von 15 Minuten wurde die Mischung auf 150°C abgekühlt und dann die Positionen 9 und 10 hinzugefügt und die Mischung homogenisiert. Dann konnte der Firnis auf Raumtemperatur abgekühlt werden.
2b. Herstellung Pigmentpaste:
   Es wurde wie bei Beispiel 1 verfahren, jedoch mit den in Tabelle 2 angegebenen Rohstoffmengen.
2c. Offsetdruckfarbe:
   Zu dem im ersten Schritt hergestellte Firnis 1 wurden Position 11, 12, 13 und 14 zugegeben und dispergiert. Nach Zugabe der in Schritt 2 hergestellten Pigmentpaste wurde unter Rühren nochmals homogenisiert.
2d. Einstellung Druckviskosität:
   Die Druckviskosität wurde abschließend mit dem Mineralöl eingestellt. Die Messung erfolgte wie im Beispiel 1 beschrieben.

**Tabelle 2: Rezepturbestandteile Beispiel 2:**

| **Bestandteil Rezeptur** | **Position** | **Einwaage [Gew.-%]** | **Rohstoff Handelsname** | **Hersteller** | **Rezepturbestandteil** | **Rohstoffbeschreibung** |
|---|---|---|---|---|---|---|
| Metallpigmentpaste | 1 | 8,132 | PKWF 28/31 AF | Fa. Haltermann | Lösemittel | Mineralöl Aromatenfrei Siedebereich 280-310°C |
| | 2 | 5,6544 | Metalure^{®} A41506 | Fa. Eckart America | Pigment | Aluminiumpigmentdispersion |
| | 3 | 1,4136 | RHODAFAC Laurylphosphonsäure | Rhodia | leafing Additiv | Laurylphosphonsäure |
| Firnis 2 | 4 | 7 | PKWF 28/31 | Haltermann | Lösemittel | Mineralöl Siedebereich 280-310°C |
| | 5 | 24,99 | Petroleumharz SK-150 | Worlee | Harz | aromatisches modifiziertes Kohlenwasserstoffharz |
| | 6 | 4,2 | ALPHA-REZ 4700 E KS04 | Hexion | Harz | phenolmodifiziertes Kolophonium-KW-Hybridharz |
| | 7 | 7 | Novarez TA 120 | Rütgers | Harz | Phenolmodifiziertes KW Harz |
| | 8 | 7 | Holzöl | HEMA GmbH & Co. KG | Lösemittel | Holzöl |
| | 9 | 7 | SYNTHALAT D 272 | Synthopol | Harz | Alkydharz |
| | 10 | 12,25 | PKWF 28/31 | Haltermann | Lösemittel | Mineralöl Siedebereich 280-310°C |
| Offsetdruckfarbe | 11 | 5 | Worleékyd S23 | Worlee | Harz | Alkydharz |
| | 12 | 0,5 | Borchers Dry 0411 HS | OMG Group | Trockenmittel | Mangancarboxylat gelöst in Fettsäureester |
| | 13 | 2,5 | Minerpol 221 | BYK | Wachs | |
| | 14 | 7,36 | PKWF 28/31 AF neu | Haltermann | Lösemittel | Mineralöl Aromatenfrei Siedebereich 280-310°C |

| | | | | | | |
|---|---|---|---|---|---|---|
| **Summe: 100** | | | | | | |

Weitere erfindungsgemäße Beispiele sowie Vergleichsbeispiele wurden gemäß der Vorgehensweise von Beispiel 1 oder 2 hergestellt unter Variation diverser Rohstoffe. Einzelheiten hierzu können Tabelle 4 und 5 entnommen werden. Dort aufgeführt sind auch die gemessenen Viskositäten unmittelbar nach dem Ansetzen der Offsetdruckfarbe sowie nach vier Wochen Lagerzeit bei Raumtemperatur (RT). Üblicherweise zeigen die erfindungsgemäßen Offsetdruckfarben einen Abfall der Viskosität nach einer gewissen Lagerzeit.

Als weiterer Firnis 3 wurde ein migrations- und geruchsarmer Firnis verwendet, dessen Zusammensetzung in Tabelle 4 dargestellt ist..

**Tabelle 3: Rezeptur Firnis 3**

| **Bestandteil Rezeptur** | **Position** | **Ein-waage [Gew.-%]** | **Rohstoff Handelsname** | **Hersteller** | **Rezepturbestandteil** | **Rohstoffbeschreibung** |
|---|---|---|---|---|---|---|
| Firnis 3 | 1 | 53,02 | Texaprint SPOC | Cognis | Lösemittel | Fettsäureester, Pentaerythritol tetraoctanoate |
| | 2 | 25,12 | Setaprint 3450E | Lawter | Harz | Phenolmodifiziertes Kolophoniumharz |
| | 3 | 10,22 | Jonrez IM 816 | WestRock | Harz | Maleinmodifiziertes Kolophoniumharz |
| | 4 | 6,98 | Kristalex F100 | Eastman | Harz | Kohlenwasserstoffharz |
| | 5 | 4,66 | Texaprint SPOC | Cognis | Lösemittel | Fettsäureester, Pentaerythritol tetraoctanoate |

| | | | | | | |
|---|---|---|---|---|---|---|
| **Summe: 100** | | | | | | |

Erfindungsgemäße Beispiele sind in Tabelle 4 dargestellt. Bei Beispiel 8 wurde das PVD-Aluminiumeffektpigment statt Schritt 1.b aus Beispiel 1 in Ethanol dispergiert und nach Zugabe von Tetraethoxysilan, Wasser und Ammoniak als Katalysator in an sich bekannter Weise mittels eines Sol-Gel-Prozesses mit SiO₂ beschichtet. Anschließend wurde Dynasilan 9116 (C16-Alkylsilan) als leafing Additiv hinzugegeben (3 Gew.-% bezogen auf Aluminiumpigment). Der SiO₂-Gehalt des beschichteten Pigments betrug 10 Gew.-%.

Tabelle 6 enthält Vergleichsbeispiele. Bei den Vergleichsbeispielen 1 und 2 wurde statt eines PVD-Aluminiumeffektpigments ein sehr dünnes, durch Nassvermahlung hergestelltes

Aluminiumpigment eingesetzt. Beim Vergleichsbeispiel 3 wurde eine PVD-Aluminiumpigmentdispersion (W-52012IL), die noch deutliche Reste eines release-coats enthielt, verwendet. Dieses Pigment wurde nicht mit einem leafing Additiv behandelt. Die Reste des release-coats bewirken einen non leafing Effekt.

Die Vergleichsbeispiele 4, 5 und 6 sowie die erfindungsgemäßen Beispiele 12 bis 14 bildeten bei gleicher grundsätzlicher Zusammensetzung eine Versuchsreiche, bei der lediglich über die Konzentration von Lösemittel die Viskosität variiert wurde.

Ferner wurden die Druckfarben des erfindungsgemäßen Beispiels 6 auf unterschiedlichsten Substraten verdruckt. Die Ergebnisse sind in Tabelle 7 dargestellt.

### II Herstellung der Andrucke sowie ihre optische Charakterisierung:

### II.1 Präparation der Andrucke mittels Prüfbau MZ II Mehrzweck-Probedruckmaschine

### (Fa. Prüfbau, Typ: MZ II)

### A Probeandruck der Metallic Druckfarbe ohne Primer

### Vorbereitung:

Das Substrat wurde auf den Druckprobenträger geklebt und der Anpressdruck der Druckwerke auf 600 N eingestellt. Die Antriebswalzen wurden auf 23°C temperiert

### Durchführung:

300 mg der Farbe wurden auf das erste Feld der Einfärbewalze aufgetragen. Durch Auflegen auf die zwei rotierenden Antriebswalzen verteilte sich die Farbe über diese. Nach 30 Sekunden wurde die Gummituchdruckform auf die Einfärbewalze aufgelegt und diese wurde nun innerhalb von 60 Sekunden eingefärbt.

Für den Druckvorgang wurde anschließend die Gummituchdruckform auf die dafür vorgesehene Halterung des Druckwerkes 1 gesteckt und der Druckprobenträger mit dem Substrat wurde in die dafür vorgesehene Laufbahn gelegt. Der Druckversuch erfolgte mit einer Druckgeschwindigkeit von 0,5 m/s.

Für alle Versuche der erfindungsgemäßen Beispiele 1 bis 13 und der Vergleichsbeispiele 1 bis 9 (siehe Tabellen 4 und 5) wurden als Substrate Etikettenpapier (Profigloss Bilderdruck 100g/m²) verwendet.

### B Probeandruck des Primers und der Metallic Farbe

Die Vorbereitung erfolgte wie unter A.

### Durchführung:

200 mg des Primers wurden auf das erste Feld der Einfärbewalze aufgetragen, 300 mg der Farbe wurden auf das zweite Feld der Einfärbewalze aufgetragen.

Anschließend wurde die Einfärbewalze auf die zwei Antriebswalzen gelegt und deren Rotation durch betätigen des Starthebels gestartet. Der Primer und die Farbe verteilten sich nun über die drei Walzen.

Nach einer Verreibezeit von 30 Sekunden wurden die Gummituchdruckformen auf die Einfärbewalze aufgelegt und innerhalb von 60 Sekunden eingefärbt.

Für den Druckvorgang wurden anschließend die beiden Gummituchdruckformen auf die dafür vorgesehene Halterung der beiden Druckwerke gesteckt, die Druckform mit Primer auf das Druckwerk 1, die Druckform mit Farbe auf das Druckwerk 2, der Druckprobenträger mit dem Substrat wurde in die dafür vorgesehene Laufbahn gelegt und der Probedruck erstellt (Druckgeschwindigkeit: 0,5 m/s).

Es wurden für die diversen Versuche zwei verschiedene Primer verwendet:
Primer 1: Huber group Lack TD Spez. 877894 (Wasserprimer)
Primer 2: Huber group Inkredible CRS MAX Transparentweiß 40N0550

### II.2 Glanzmessungen:

Die Glanzmessungen der Probeandrucke wurden mittels eines micro-TRI-gloss (Fa. Byk-Gardner) durchgeführt._Die Messungen erfolgten bei einem Glanzwinkel von 60°. Es wurde an fünf verschiedenen Stellen des Probedruckes gemessen. Die in Tabelle 4 angegebenen Werte sind die hieraus gebildeten Mittelwerte.

### II. 3 Bestimmen der Farbdichte des Probeandruckes mittels des Geräts SpectroDens (Fa. TECHKON)

Das Spektral-Densitometer besitzt vier CMYK-Farbfilter. Bei einer Messung wurden für alle vier Farbfilter die Werte der Farbdichte gemessen. Für die Messung von Metallic Farben des Farbtones *Silber* wurde der Wert für den Farbfilter C verwendet. Die Messung wurde an mindestens drei Stellen auf der Probe wiederholt und jeweils der Mittelwert verwendet. Die Kalibrierung auf Papierweiß erfolgte am verwendeten unbedruckten Substrat.

### 11.4 Bestimmen des Lustre Wertes mit Hilfe des Farbmessgeräts X-Rite SP64:

Der anteilige Unterschied zwischen Streulicht und Totalreflexion ist ein Maß für die visuelle Beurteilung der Brillanz, Abbildschärfe und Milchigkeit des Spiegeleffektes

Das Farbmessgerät weist eine Kugelgeometrie und eine Glanzfalle auf, was eine Messung der Größen SPEX und SPIN erlaubt.

Der SPIN Wert gibt hierbei die Gesamtmenge des reflektierenden Lichtes in alle Raumrichtungen entsprechend der Kugelgeometrie an, wohingegen bei der SPEX Messung die Glanzfalle hinzugeschaltet wird und nur das verbleibende Streulicht gemessen wird. Die Differenz der beiden Werte ergibt den sogenannten Lustre Wert. Dieser ist ein Maß für den Anteil des eingestrahlten Lichtes, welcher in der Totalreflexion reflektiert wird und damit den Effekt eines Spiegels darstellt. Je höher also der Lustre Wert (und daher: je geringer der SPEX-Wert und je höher der SPIN Wert) ist, umso klarer ist der Spiegeleffekt und damit die Abbildeschärfe.

Zur Kalibration wurde ein Schwarz und Weiß Abgleich durchgeführt. Gemessen wurden der SPIN und der SPEX Wert an jeweils 5 Stellen des Andruckes und hieraus wurde der Mittelwert gebildet. Es wurden die Andrucke B mit Primer vermessen.

### II.5 Visuelle Beurteilung:

Es zeigte sich, dass die verschiedenen Maßzahlen aus den Messungen nicht immer den Gesamteindruck für das menschliche Auge wiedergeben vermochten. Daher wurden zusätzlich zu den gemessenen Größen der visuelle Gesamteindruck der Andrucke im Hinblick auf den Spiegeleffekt anhand eines Notensystems (Note 1: sehr gut, Note 2: gut, Note 3: befriedigend, Note 4: nicht mehr ausreichend, Note 5: mangelhaft) beurteilt.

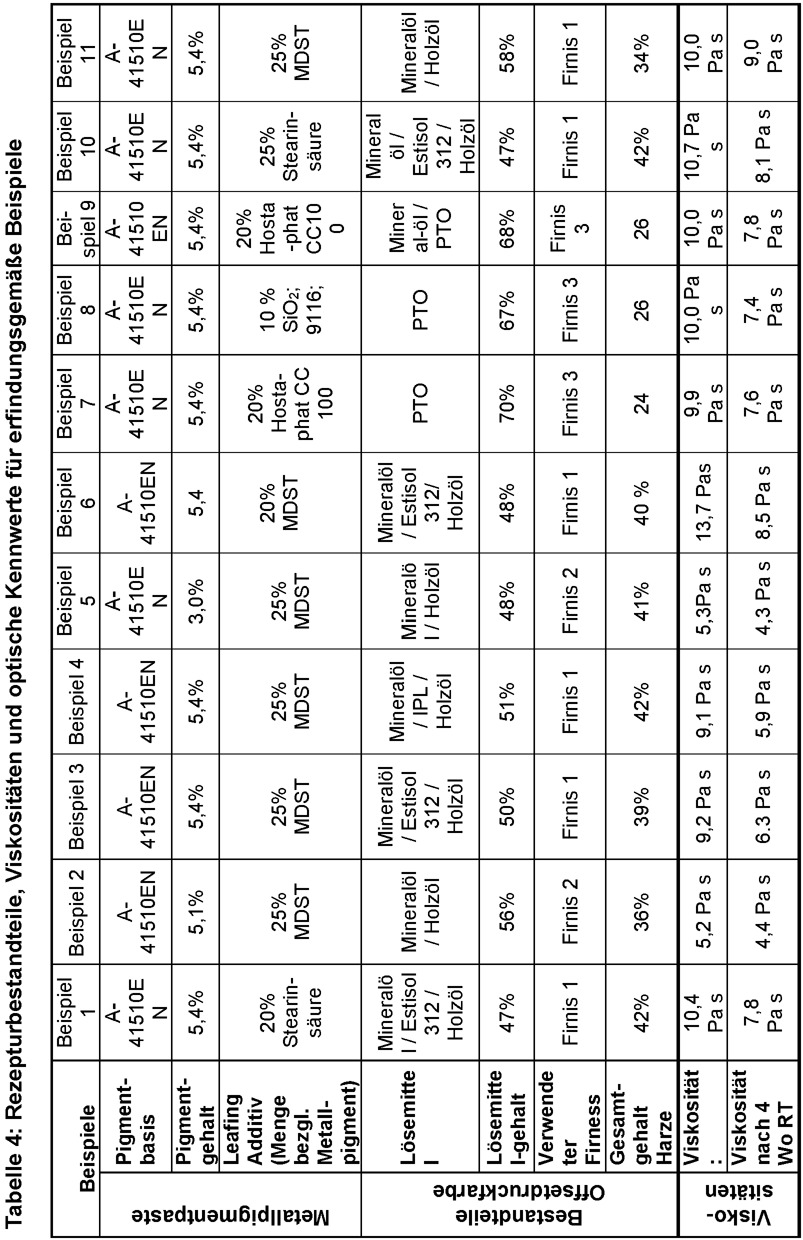

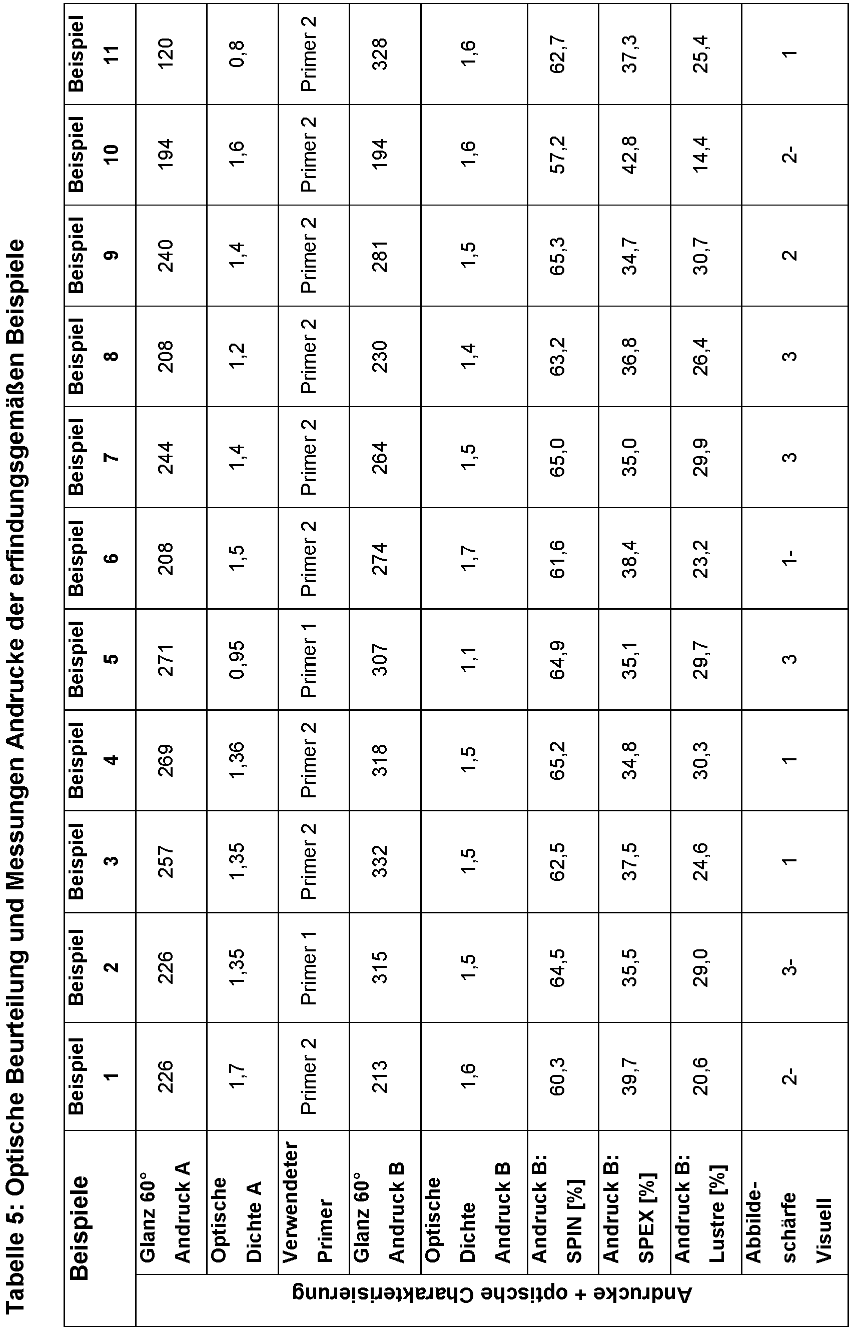

### III Interpretation:

### III.1 Erfindungsgemäße Beispiele (Tabellen 4 und 5):

Als beste erfindungsgemäße Beispiele erwiesen sich die Beispiele 3, 4, 11 und 6. Bei allen Beispielen waren im Andruck B recht hohe optische Dichten und hohe Glanzwerte zu beobachten. Der Lustre-Wert korrelierte nicht immer zu den visuellen Beurteilungen des Spiegelglanzeffekts. Die visuell am geringsten bewerteten Versuche waren die Beispiele 2 und 5. Bei diesen Versuchen wurde als Primer ein Wasserprimer eingesetzt, der offenbar weniger verträglich zur erfindungsgemäßen Offsetdruckfarbe war als der konventionelle Primer 1. Die visuell ebenfalls mit Note 3 bewerteten Beispiele 7 und 8 waren mit Firnis 3 formuliert, der einen sehr hohen Lösemittelgehalt und einen sehr niedrigen Bindemittelgehalt aufwies. Dieses nicht ideal ausgewogene Bindemittel- / Lösemittelverhältnis kann die Orientierung der Aluminiumpigmente und damit die Glanzbildung bereits negativ beeinflussen. Bei Beispiel 5 ist der verhältnismäßig niedrige visuelle Beurteilung wohl vor allem auf die niedrige optische Dichte zurückzuführen. Diese wiederum dürfte in erster Linie auf die verhältnismäßig geringe Aluminiumpigmentkonzentration zurückzuführen sein. Gemessen wurde für diese Probe zwar hohe Glanz- und Lustrewerte, jedoch macht sich die schlechtere optische Dichte im optischen Gesamteindruck bemerkbar.

Aller erfindungsgemäßen Beispiele wiesen jedoch einen so hohen Spiegelglanz auf, der zuvor noch nicht in konventionellen metallpigmentierten Offsetdruckfarben erreicht wurde.

### III. 2 Vergleichsbeispiele (Tabelle 6):

Die beiden ersten Vergleichsbeispiele verwendeten ein nassvermahlenes Aluminiumpigment anstatt eines PVD-Pigments (PLATIN-VARIO AE-82001 der Fa. Eckart GmbH). Die Glanz- und Lustrewerte sowie die visuelle Beurteilung fallen drastisch schlechter aus als bei allen erfindungsgemäßen Beispielen mit PVD-Pigmenten. Ähnlich schlechte Ergebnisse wurden für das Vergleichsbeispiel 3 mit einem non leafing PVD-Pigment erhalten.

Bei der Variation der Viskosität konnte man mit steigender Viskosität einen Abfall des Spiegeleffektes (Glanz- und Lustrewerte sowie die visuelle Beurteilung) erkennen. Die höchsten Werte erhielt das Vergleichsbeispiel 4. Allerdings war bei dieser niedrigviskosen Druckfarbe (Viskosität: 2,2 Pa s) bereits ein unerwünschtes "Nebeln" zu erkennen. Auch die Wischfestigkeit und Punktschärfe bei feinen Detailelementen wurde ersichtlich.

Bei den Vergleichsbeispielen 5 und 6 waren, trotz noch relativ guter Glanz- und Lustrewerte in den Messungen, eindeutig ersichtlich, dass die Abbildeschärfen durch eine deutlich zunehmende Milchigkeit des Spiegels und damit der Spiegeleffekt nicht mehr ausreichend war, um als erfindungsgemäße Beispiele zu gelten. Die hohen Viskositäten scheinen hier eine optimale Orientierung der plättchenförmigen Aluminiumpigmente im Andruck zu verhindern.

### III.3 Variation der Substrate:

Getestet wurde auf verschiedenen Papier und Kartonsubstraten.

Bei den Papiersubstraten handelte es sich um relativ vergleichbare Qualitäten, aus Frischfaser hergestellt, gebleicht und gestrichen.

Die verwendeten Qualitäten bei den Kartonsubstraten reichen von Recycling bis gebleichtem Frischfaserkarton. Die Versuche mit gebleichtem, gestrichenen Frischfaserkarton sind von links nach rechts optisch hochwertiger, da sie von ihrer Oberflächenstruktur her glatter werden und andererseits das Lösemittel wegschlagen kann und eine oxidative Trocknung in einem gut balancierten Verhältnis stattfindet., Dies führt zu einer guten Orientierung der Aluminiumpigmente. Der Druckversuch auf dem hochwertigsten Substrat (Chromalux) führte zu einem extrem guten Spiegelglanz, der in dieser ausgeprägten Form im Offsetdruck bislang noch nicht erreicht wurde.

Die aufgrund ihrer sehr rauen Oberflächenstrukturen am wenigsten geeignete Substrate (Frischfaser: Sappi GZ; Recycling: Mayr-Melnhof Mirabell) erzeugten einen unerwartet erstaunlichen Metalleffekt. Zwar ist die Abbildeschärte mit zunehmendem Abstand zum Druckobjekt durch die Oberflächenstruktur abgeschwächt, erzeugt aber einen diffusen, nicht milchigen Spiegel. So kann ein bisher unerreichter, erstaunlicher Metalleffekt erzielt werden, der so vorher nicht auf diesen Substraten zu erreichen war. Hierbei war die raue Struktur des Substrats noch sichtbar, erhält durch die Metallpigmentbedruckung mit der erfindungsgemäßen Druckfarbe jedoch einen bisher unbekannten gedruckten optischen Effekt.

**Tabelle 6: Rezepturbestandteile, Viskositäten und optische Kennwerte für Vergleichsbeispiele sowie Viskositätsvariation**

| | **Nassvermahlene Al-Pigmente** | | **Non-leafing** | **Versuchsreihe Variation Viskosität** | | | | | |
|---|---|---|---|---|---|---|---|---|---|
| **Beispiel / Vergleichsbeispiel** | Vergleichsbeispiel 1 | Vergleichsbeispiel 2 | Vergleichs -beispiel 3 | Vergleichs -beispiel 4 | Beispiel 12 | Beispiel 13 | Beispiel 14 | Vergleichsbeispiel 5 | Vergleichs -beispiel 6 |
| **Pigmentbasis** | PLATIN-VARIO AE-82001 (Fa. Eckart GmbH) | PLATIN-VARIO AE-82001 | W-520121L* | A-41510 EN | A-41510EN | A-41510E N | A-41510EN | A-41510EN | A-41510EN |
| **Pigmentgehalt [%]** | 5,4 | 5,4 | 5,2 | 5,7 | 6,1 | 6,4 | 6,5 | 6,9 | 7,1 |
| **Leafing Additiv** | 25% MDST | 20% MDST | | 25% MDST | 25% MDST | 25% MDST | 25% MDST | 25% MDST | 25% MDST |
| **Lösemittel** | Mineralöl / Estisol 312 Holzöl | Mineralöl / Estisol 312 / Holzöl | PTO / Holzöl | Mineralöl / Holzöl | Mineralöl / Holzöl | Mineral -öl / Holzöl | Mineralöl / Holzöl | Mineralöl / Holzöl | Mineralöl / Holzöl |
| **Lösemittelgehalt** | 44 | 44 | 65 | 52 | 48 | 45 | 44 | 41 | 39 |
| **Harzzusammensetzung** | Firnis 1 | Firnis 1 | Firnis 3 | Firnis 2 | Firnis 2 | Firnis 2 | Firnis 2 | Firnis 2 | Firnis 2 |
| **Gesamtgehalt** Harze | 42 | 42 | 29 | 32 | 34 | 35 | 36 | 38 | 48 |
| **Viskosität:** | 11,7 Pa s | 11,7 Pa s | 11 Pa s | 2,2 Pa s | 5,5 Pa s | 8,1 Pa s | 11,4 Pa s | 21,4 Pa s | 34,5 Pa s |
| **Glanz 60°** | 101 | 112 | 53 | 179 | 157 | 171 | 163 | 154 | 141 |
| **optische** Dichte | 1,1 | 1,1 | 0,9 | 1,6 | 1,2 | 1,2 | 1,3 | 1,3 | 1,3 |
| **Primer** | Primer 2 | Primer 2 | Primer 2 | Primer 2 | Primer 2 | Primer 2 | Primer 2 | Primer 2 | Primer 2 |
| **Glanz 60° auf Primer** | 121 | 121 | 81 | 311 | 309 | 296 | 277 | 221 | 190 |
| **optische Dichte auf Primer** | 1,25 | 1,2 | 0,8 | 1,9 | 1,9 | 1,9 | 1,8 | 1,65 | 1,6 |
| **SPIN mit Primer [%]** | 55,8 | 55,88 | 57,3 | 66,5 | 66,2 | 65,6 | 65,5 | 61,5 | 60,7 |
| **SPEX mit Primer [%]** | 44,2 | 44,12 | 42,7 | 33,5 | 33,8 | 34,4 | 34,6 | 38,5 | 39,3 |
| **Lustre mit Primer [%]** | 11,6 | 11,76 | 14,6 | 33,0 | 32,4 | 31,2 | 30,9 | 23,0 | 21,3 |
| **Abbildeschärfe Visuell** | 5 | 5 | 5 | 1 | 1- | 2 | 3 | 4 | 4- |

**Tabelle 7: Druckfarbe in Anlehnung an Beispiel 6 verdruckt auf unterschiedlichsten Substraten**

| | **Gebleichte Frischfaser, gestrichen** | | | **Recycling Karton, Doppelstrich** | **Frischfaserkarton, gebleicht, gestrichen** | | | |
|---|---|---|---|---|---|---|---|---|
| **Optische Beurteilung / Substrate** | Profigloss Bilderdruck 100 g/m² | Perfect B Super 75 g/m² | WSHG 5 | Mayr-Melnhof Mirabell GD2 300 g/m² | Sappi GZ 280 g/m² | Invercote T 240 g/m² | Truecard Ice 300 g/m² | Chromalux |
| Glanz 60° Andruck A | 208 | 186 | 183 | 175 | 191 | 259 | 171 | 228 |
| Optische Dichte Andruck A | 1,5 | 1,2 | 1,1 | 1,5 | 1,6 | 1,6 | 1,1 | 1,1 |
| Glanz 60° Andruck B | 274 | 233 | 263 | 200 | 186 | 232 | 247 | 238 |
| Optische Dichte Andruck AB | 1,7 | 1,6 | 1,7 | 1,6 | 1,7 | 1,7 | 1,7 | 1,5 |
| Andruck B: SPIN (%) | 61,59 | 61,76 | 62,2 | 60,47 | 61,43 | 62,11 | 63,39 | 62,93 |
| Andruck B: SPEX (%) | 38,41 | 38,24 | 37,8 | 39,53 | 38,57 | 37,89 | 36,61 | 37,07 |
| Andruck B: Lustre mit Primer (%) | 23,18 | 23,52 | 24,4 | 20,94 | 22,86 | 24,22 | 26,78 | 25,86 |
| Andruck B: Spiegeleffekt Visuell | 1- | 2 | 1- | 3 | 3 | 2 | 1 | 1+ |

## Patentansprüche

1. Offsetdruckfarbe enthaltend plättchenförmige Aluminiumpigmente mit einer mittleren Dicke h₅₀ aus einem Bereich von 15 bis 80 nm sowie Bindemittel und Lösemittel,
**dadurch gekennzeichnet,**
**dass** die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist, wobei das Lösemittel der Gruppe bestehend aus Mineralölen, Pflanzenölen und Fettsäureestern oder Mischungen daraus, entnommen ist, wobei die Pflanzenöle nicht ohne mindestens eines der jeweils anderen beiden Lösemittel verwendet werden.

2. Offsetdruckfarbe nach Anspruch 1,
**dadurch gekennzeichnet,**
**dass** der Lösemittelgehalt in einem Bereich von 40 - 72 Gew.-%, bezogen auf die gesamte Offsetdruckfarbe, liegt.

3. Offsetdruckfarbe nach einem der vorstehenden Ansprüche,
**dadurch gekennzeichnet,**
**dass** die Viskosität in einem Bereich von 4,1 bis 12 Pa s liegt.

4. Offsetdruckfarbe nach einem der Ansprüche 1 bis 3,
**dadurch gekennzeichnet,**
**dass** die Viskosität in einem Bereich von 4,0 bis 9,2 Pa s liegt.

5. Offsetdruckfarbe nach einem der vorstehenden Ansprüche,
**dadurch gekennzeichnet,**
**dass** das leafing Additiv eine organische Phosphor-haltige Verbindung ist, die
a) Phosphorsäuren oder Phosphorsäureester mit der allgemeinen Formel (I)
(O)P(OR¹)(OR²)(OR³) (I)
und/oder
b) Phosphonsäuren oder Phosphonsäureester der allgemeinen Formel (II)
(O)PR⁴(OR¹)(OR²) (II)
und/oder
c) Phosphinsäure oder Phosphinsäureester der allgemeinen Formel (III)
(O)PR⁴R⁵(OR¹) (III)
ist, wobei
- R¹, R² und R³ unabhängig voneinander H oder eine verzweigte oder unverzweigte Alkyl-, Aryl-, Alkylaryl-, Arylalkylgruppe mit 1 bis 30 C-Atomen ist, die optional Heteroatome wie O, S, und/oder N enthält, mit der Maßgabe, dass im Fall einer Verbindung der Formel (I) mindestens einer dieser Reste eine verzweigte oder unverzweigte Alkyl-, Aryl-, Alkylaryl-, Arylalkylgruppe mit 8 bis 30 C-Atomen ist,
- R⁴ und R⁵ unabhängig voneinander eine verzweigte oder unverzweigte Alkyl-, Aryl-, Alkylaryl-, Arylalkylgruppe mit 8 bis 30 C-Atomen ist, die optional Heteroatome wie O, S, und/oder N enthält,
oder
eine Verbindung der allgemeinen Formel (IV)
R⁶-X (IV)
ist, wobei R⁶ ein aliphatischer, bevorzugt unverzweigter, Alkylrest mit 12 bis 30 C-Atomen ist und wobei X eine Carboxylgruppe oder eine Carboxylatgruppe, eine Aminogruppe oder ein Trialkoxysilan ist.

6. Offsetdruckfarbe nach Anspruch 5,
**dadurch gekennzeichnet,**
**dass** für das leafing Additiv R⁴, R⁵ und R⁶ unabhängig voneinander eine verzweigte oder unverzweigte Alkyl-, Aryl-, Alkylaryl-, Arylalkylgruppe mit 14 bis 20 C-Atomen ist.

7. Offsetdruckfarbe nach Anspruch 5,
**dadurch gekennzeichnet,**
**dass** das leafing Additiv
i) eine Phosphonsäure ist, wobei R¹= R²= H und R⁴ eine verzweigte oder unverzweigte Alkyl-, Aryl-, Alkylaryl-, Arylalkylgruppe mit 8 bis 18 C-Atomen ist
oder
ii) ein Phosphorsäureester ist, wobei mindestens einer der Reste R¹, R², R³ eine verzweigte oder unverzweigte Alkylgruppe mit 8 bis 18 C-Atomen ist
oder
iii) eine Carbonsäuren gemäß Formel (IV) ist, die der Gruppe bestehend aus Stearinsäure, Ammoniumstearat, Alkalistearat, Erdalkalistearat oder Mischungen hiervon, entnommen wird.

8. Offsetdruckfarbe nach einem der vorstehenden Ansprüche,
**dadurch gekennzeichnet,**
**dass** die Pigmentierungshöhe des Aluminiumpigments 2 bis 8 Gew.-%, bevorzugt 2,5 bis 6 Gew.-% beträgt, jeweils bezogen auf das Gesamtgewicht der Offsetdruckfarbe.

9. Offsetdruckfarbe nach einem der vorstehenden Ansprüche,
**dadurch gekennzeichnet,**
**dass** das Bindemittel der Gruppe bestehend aus Alkydharze, modifizierte Kolophoniumharze, Maleinatharze, aromatische Kohlenwasserstoffharze, modifizierte Kohlenwasserstoffharze, Allylester mehrwertiger organischer Säuren, Polyallylether und deren Mischungen, entnommen wird.

10. Offsetdruckfarbe nach einem der vorstehenden Ansprüche,
**dadurch gekennzeichnet,**
**dass** die Offsetdruckfarbe weitere Additive der Gruppe bestehend aus Trockenmittel, Wachse, Filmbildehilfsmittel, Dispergierhilfsmittel, Antioxidantien und deren Mischungen, entnommen wird, enthält.

11. Offsetdruckfarbe nach einem der vorstehenden Ansprüche,
**dadurch gekennzeichnet,**
**dass** die mittleren Größen d₅₀ der PVD-Aluminiumeffektpigmente in einem Bereich von 4 bis 15 µm liegen.

12. Verfahren zur Herstellung einer Offsetdruckfarbe nach den Ansprüchen 1 bis 11,
**dadurch gekennzeichnet,**
**dass** das Verfahren folgende Schritte umfasst:
a) Bereitstellen eines Offsetfirnisses durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

13. Verfahren zur Herstellung eines bedruckten Substrats mit metallischem Spiegelglanz, umfassend die folgende Schritte:
a) optional Aufbringen eines Primers auf dem Substrat
b) Aufbringen einer Offsetdruckfarbe nach einem der Ansprüche 1 bis 11 auf die Primerschicht oder auf dem Substrat unter Ausbildung einer hochglänzenden Druckschicht B
c) optional Aufbringen weiterer Farbschichten C auf die Schicht B.

14. Verfahren zur Herstellung eines bedruckten Substrats mit metallischem Spiegelglanz nach Anspruch 13,
**dadurch gekennzeichnet,**
**dass** als erster Schritt a), vor dem Aufbringen der hochglänzenden Druckschicht B, ein Primer aufgebracht wird.

15. Verfahren nach einem der Ansprüche 13 oder 14,
**dadurch gekennzeichnet, dass** die Schicht B nur einmal in einem Druckvorgang aufgebracht wird.

## Claims

1. Offset printing ink comprising platelet-shaped aluminium pigments having an average thickness hso from a range from 15 to 80 nm, and also binders and solvents,
**characterized**
**in that** the platelet-shaped aluminium pigments are produced by PVD methods and are coated at least partly with a leafing additive and in that the offset printing ink has a viscosity of 4 to 15 Pa s, measured on the sample conditioned at 25°C, using a rotational viscometer having a cone/plate geometry at a shear stress of 185.9 Pa, wherein the solvent is taken from the group consisting of mineral oils, vegetable oils, and fatty acid esters or mixtures thereof, wherein the vegetable oils are not being used without at least one of the other two solvents.

2. Offset printing ink according to Claim 1,
**characterized**
**in that** the solvent content is in a range of 40 - 72 wt%, based on the overall offset printing ink.

3. Offset printing ink according to either of the preceding claims,
**characterized**
**in that** the viscosity is in a range from 4.1 to 12 Pa s.

4. Offset printing ink according to any of Claims 1 to 3,
**characterized**
**in that** the viscosity is in a range from 4.0 to 9.2 Pa s.

5. Offset printing ink according to any of the preceding claims,
**characterized**
**in that** the leafing additive is a phosphorus-containing organic compound which is
a) phosphoric acids or phosphoric esters having the general formula (I)
(O)P(OR¹)(OR²)(OR³) (I)
and/or
b) phosphonic acids or phosphonic esters of the general formula (II)
(O)PR⁴(OR¹)(OR²) (II)
and/or
c) phosphinic acid or phosphinic esters of the general formula (III)
(O)PR⁴R⁵(OR¹) (III)
wherein
- R¹, R² and R³ independently of one another is H or a branched or unbranched alkyl, aryl, alkylaryl or arylalkyl group having 1 to 30 carbon atoms and optionally containing heteroatoms such as O, S, and/or N, with the proviso that in the case of a compound of the formula (I), at least one of these radicals is a branched or unbranched alkyl, aryl, alkylaryl or arylalkyl group having 8 to 30 carbon atoms,
- R⁴ and R⁵ independently of one another is a branched or unbranched alkyl, aryl, alkylaryl or arylalkyl group having 8 to 30 carbon atoms and optionally containing heteroatoms such as O, S, and/or N,
or
is a compound of the general formula (IV)
R⁶-X (IV)
wherein R⁶ is an aliphatic, preferably unbranched, alkyl radical having 12 to 30 carbon atoms and wherein X is a carboxyl group or a carboxylate group, an amino group or a trialkoxysilane.

6. Offset printing ink according to Claim 5,
**characterized**
**in that** for the leafing additive R⁴, R⁵ and R⁶ independently of one another is a branched or unbranched alkyl, aryl, alkylaryl or arylalkyl group having 14 to 20 carbon atoms.

7. Offset printing ink according to Claim 5,
**characterized**
**in that** the leafing additive
i) is a phosphonic acid, wherein R¹= R² = H and R⁴ is a branched or unbranched alkyl, aryl, alkylaryl, or arylalkyl group having 8 to 18 carbon atoms
or
ii) is a phosphoric ester, wherein at least one of the radicals R¹, R² and R³ is a branched or unbranched alkyl group having 8 to 18 carbon atoms
or
iii) is a carboxylic acid of formula (IV), from the group consisting of stearic acid, ammonium stearate, alkali metal stearate, alkaline earth metal stearate or mixtures thereof.

8. Offset printing ink according to any of the preceding claims,
**characterized**
**in that** the level of pigmentation of the aluminium pigment is 2 to 8 wt%, preferably 2.5 to 6 wt%, based in each case on the overall weight of the offset printing ink.

9. Offset printing ink according to any of the preceding claims,
**characterized**
**in that** the binder is from the group consisting of alkyd resins, modified rosins, maleate resins, aromatic hydrocarbon resins, modified hydrocarbon resins, allyl esters of polybasic organic acids, polyallyl ethers and mixtures thereof.

10. Offset printing ink according to any of the preceding claims,
**characterized**
**in that** the offset printing ink comprises further additives from the group consisting of dryers, waxes, film-forming assistants, dispersing assistants, antioxidants and mixtures thereof.

11. Offset printing ink according to any of the preceding claims,
**characterized**
**in that** the average sizes dso of the PVD aluminium effect pigments are in a range from 4 to 15 µm.

12. Method for producing an offset printing ink according to Claims 1 to 11,
**characterized**
**in that** the method comprises the following steps:
a) providing an offset varnish by mixing and heating binders and solvents,
b) providing a paste with PVD aluminium effect pigments which have an average thickness hso of 15 to 80 nm and are coated with a leafing additive,
c) adding further solvents and optionally further additives to the varnish a) and carrying out mixing with the PVD aluminium pigment paste b),
d) setting the viscosity in a range from 4 to 15 Pa s, wherein the viscosity is set preferably by addition of solvent, and wherein the viscosity is measured on the sample conditioned at 25°C using a rotational viscometer having a cone/plate geometry at a shear stress of 185.9 Pa,
d) optionally ageing the offset printing ink until it has attained a viscosity in a range from 4.0 to 12 Pa s.

13. Method for producing a printed substrate with metallic specular gloss, comprising the following steps:
a) optionally applying a primer to the substrate,
b) applying an offset printing ink according to any of Claims 1 to 11 to the primer layer or to the substrate, to form a high-gloss print layer B,
c) optionally applying further colour layers C to the layer B.

14. Method for producing a printed substrate with metallic specular gloss according to Claim 13,
**characterized**
**in that** as first step a), before the application of the high-gloss print layer B, a primer is applied.

15. Method according to either of Claims 13 or 14,
**characterized in that** the layer B is applied only once in one printing procedure.

## Revendications

1. Encre d'impression offset contenant des pigments d'aluminium en paillettes ayant une épaisseur moyenne h₅₀ dans une plage de 15 à 80 nm ainsi que des liants et solvants,
**caractérisée en ce que** les pigments d'aluminium en paillettes sont produits par le procédé PVD et sont au moins en partie enrobés avec un additif de feuilletage et **en ce que** l'encre d'impression offset présente une viscosité de 4 à 15 Pa.s, mesurée sur l'échantillon amené à une température constante de 25 °C, à l'aide d'un viscosimètre rotatif avec une géométrie cône-plan, à une contrainte de cisaillement de 185,9 Pa, le solvant étant choisi dans le groupe constitué par les huiles minérales, les huiles végétales et les esters d'acides gras ou des mélanges de tels solvants, les huiles minérales n'étant pas utilisées sans au moins un des deux autres solvants.

2. Encre d'impression offset selon la revendication 1, **caractérisée en ce que**
la teneur en solvant se situe dans une plage de 40 - 72 % en poids, par rapport à l'encre d'impression offset totale.

3. Encre d'impression offset selon l'une quelconque des revendications précédentes,
**caractérisée en ce que**
la viscosité se situe dans une plage de 4,1 à 12 Pa.s.

4. Encre d'impression offset selon l'une quelconque des revendications 1 à 3,
**caractérisée en ce que**
la viscosité se situe dans une plage de 4,0 à 9,2 Pa.s.

5. Encre d'impression offset selon l'une quelconque des revendications précédentes,
**caractérisée en ce que**
l'additif de feuilletage est un composé phosphoré organique qui consiste en
a) des acides phosphoriques ou esters d'acides phosphoriques de formule générale (I)
(O)P(OR¹)(OR²)(OR³) (I)
et/ou
b) des acides phosphoniques ou esters d'acides phosphoniques de formule générale (II)
(O)PR⁴(OR¹)(OR²) (II)
et/ou
c) l'acide phosphinique ou les esters d'acide phosphinique de formule générale (III)
(O)PR⁴R⁵(OR¹) (III)
où
- R¹, R² et R³ représentent indépendamment les uns des autres H ou un groupe alkyle, aryle, alkylaryle, arylalkyle ramifié ou non ramifié, ayant de 1 à 30 atomes de carbone, qui en option contient des hétéroatomes, tels que O, S et/ou N, étant entendu que dans le cas d'un composé de formule (I) au moins l'un de ces radicaux est un groupe alkyle, aryle, alkylaryle, arylalkyle ramifié ou non ramifié, ayant de 8 à 30 atomes de carbone,
- R⁴ et R⁵ représentent indépendamment l'un de l'autre un groupe alkyle, aryle, alkylaryle, arylalkyle ramifié ou non ramifié, ayant de 8 à 30 atomes de carbone, qui en option contient des hétéroatomes, tels que O, S et/ou N,
ou est un composé de formule générale (IV)
R⁶-X (IV)
dans laquelle R⁶ est un radical alkyle aliphatique, de préférence non ramifié, ayant de 12 à 30 atomes de carbone et dans laquelle X est un groupe carboxy ou un groupe carboxylate, un groupe amino ou un groupe trialcoxysilane.

6. Encre d'impression offset selon la revendication 5,
**caractérisée en ce que**
pour l'additif de feuilletage R⁴, R⁵ et R⁶ représentent indépendamment les uns des autres un groupe alkyle, aryle, alkylaryle, arylalkyle ramifié ou non ramifié, ayant de 14 à 20 atomes de carbone.

7. Encre d'impression offset selon la revendication 5, **caractérisée en ce que**
l'additif de feuilletage
i) est un acide phosphonique, dans lequel R¹=R²= H et R⁴ est un groupe alkyle, aryle, alkylaryle, arylalkyle ramifié ou non ramifié, ayant de 8 à 18 atomes de carbone
ou
ii) est un ester d'acide phosphorique, dans lequel au moins l'un des radicaux R¹, R², R³ est un groupe alkyle ramifié ou non ramifié ayant de 8 à 18 atomes de carbone
ou
iii) est un acide carboxylique selon la formule (IV), qui est choisi dans le groupe constitué par l'acide stéarique, le stéarate d'ammonium, un stéarate de métal alcalin, un stéarate de métal alcalino-terreux ou des mélanges de ceux-ci.

8. Encre d'impression offset selon l'une quelconque des revendications précédentes,
**caractérisée en ce que**
la hauteur de pigmentation du pigment d'aluminium vaut de 2 à 8 % en poids, de préférence 2,5 à 6 % en poids, chaque fois par rapport au poids total de l'encre d'impression offset.

9. Encre d'impression offset selon l'une quelconque des revendications précédentes,
**caractérisée en ce que**
le liant est choisi dans le groupe constitué par les résines alkyde, les résines de colophane modifiées, les résines maléate, les résines hydrocarbonées aromatiques, les résines hydrocarbonées modifiées, les esters allyliques d'acides organiques plurivalents, les éthers polyallyliques et des mélanges de ceux-ci.

10. Encre d'impression offset selon l'une quelconque des revendications précédentes,
**caractérisée en ce que**
l'encre d'impression offset contient d'autres additifs choisis dans le groupe constitué par les siccatifs, cires, adjuvants filmogènes, adjuvants de dispersion, antioxydants et des mélanges de ceux-ci.

11. Encre d'impression offset selon l'une quelconque des revendications précédentes,
**caractérisée en ce que**
les tailles moyennes d₅₀ des pigments d'aluminium-PVD à effet se situent dans une plage de 4 à 15 µm.

12. Procédé pour la production d'une encre d'impression offset selon les revendications 1 à 11,
**caractérisé en ce que**
le procédé comprend les étapes suivantes :
a) préparation d'un vernis offset par mélange et chauffage de liants et solvants,
b) préparation d'une pâte avec des pigments d'aluminium-PVD à effet qui présentent une épaisseur moyenne h₅₀ de 15 à 80 nm et sont enrobés avec un additif de feuilletage
c) addition d'autres solvants et en option d'autres additifs au vernis a) ainsi que mélange avec la pâte de pigment d'aluminium-PVD b)
d) ajustement de la viscosité dans une plage de 4 à 15 Pa, la viscosité étant ajustée de préférence par addition de solvant et la viscosité étant mesurée sur l'échantillon amené à une température constante de 25 °C, à l'aide d'un viscosimètre rotatif avec une géométrie cône-plan, à une contrainte de cisaillement de 185,9 Pa,
d) en option vieillissement de l'encre d'impression offset, jusqu'à ce qu'elle ait atteint une viscosité dans une plage de 4,0 à 12 Pa.s.

13. Procédé pour la production d'un support imprimé à brillant spéculaire métallique comprenant les étapes suivantes :
a) en option application d'un primaire sur le support
b) application d'une encre d'impression offset selon l'une quelconque des revendications 1 à 11 sur la couche de primaire ou sur le support avec formation d'un couche d'impression B à haut brillant
c) en option application d'autres couches d'encre C sur la couche B.

14. Procédé pour la production d'un support imprimé à brillant spéculaire métallique selon la revendication 13,
**caractérisé en ce**
**qu'**avant l'application de la couche d'impression B à haut brillant on applique un primaire en tant que première couche a).

15. Procédé selon l'une quelconque des revendications 13 et 14,
**caractérisé en ce que** la couche B n'est appliquée qu'une seule fois dans un processus d'impression.
